# EUROPÄISCHE PATENTSCHRIFT

(11) **EP 0 623 567 B1**
(45) Veröffentlichungstag und Bekanntmachung des Hinweises auf die Patenterteilung: **30.08.1995**
(21) Anmeldenummer: 94107047.6
(22) Anmeldetag: 05.05.1994
(51) Int. Cl.: C04B 30/00, C04B 38/06, F16L 59/04

(54) **Verfahren zur Herstellung eines mikroporösen Körpers mit wärmedämmenden Eigenschaften**
Process for preparing microporous bodies with thermal insulating properties
Procédé pour la fabrication de corps microporeux à caractéristiques calorifuges

(30) Priorität: 06.05.1993 DE 4315088
(43) Veröffentlichungstag der Anmeldung: 09.11.1994
(73) Patentinhaber: Wacker-Chemie GmbH, 81737 München (DE)
(72) Erfinder: Stohr, Günter, Dr., D-87471 Durach (DE); Eyhorn, Thomas, D-87452 Altusried (DE); Kratel, Günter, Dr., D-87471 Durach (DE)

(56) Entgegenhaltungen:
- EP-A- 0 027 633
- DE-A- 3 713 526
- FR-A- 488 308

## Beschreibung

Die Erfindung betrifft ein Verfahren zur Herstellung eines mikroporösen Körpers mit wärmedämmenden Eigenschaften auf der Basis hochdisperser Oxide der Elemente Silicium und/oder Aluminium.

Aus der EP-27633 B1 ist bereits ein Verfahren zur Herstellung eines Wärmeisolierkörpers aus einem hochdispersen Isoliermaterial, Trübungsmittel, verstärkendem Fasergemisch und gegebenenfalls einem Bindemittel, wobei diese Materialien gemischt und verfestigt werden, bekannt. Nachteilig an diesem Verfahren ist, daß neben organischen Fasern auch anorganische Fasern, wie Asbest verwendet werden, deren gesundheitsschädliche Wirkung nachgewiesen ist. In der genannten Patentschrift wird ferner beschrieben, daß als Bindemittel sämtliche anorganische oder organische Bindemittel eingesetzt werden können, die unterhalb von 700 °C erweichen oder schmelzen, wobei die Temperaturgrenze von ca. 700 °C zu beachten ist, weil oberhalb dieser Grenze die Isoliermaterialteilchen zu sintern beginnen und die wärmedämmende Eigenschaft des Isolierkörpers verloren geht.

Aufgabe der nachstehend beschriebenen Erfindung ist es, ein Verfahren zur Herstellung eines mikroporösen Körpers mit wärmedämmenden Eigenschaften aufzuzeigen, das ohne die Verwendung anorganischer Fasern als Verstärkungsmaterial auskommt und das nicht den im Stand der Technik genannten Einschränkungen bezüglich der Temperaturbelastung des mikroporösen Körpers unterliegt.

Gelöst wird die Aufgabe durch ein Verfahren gemäß dem Oberbegriff des Anspruchs 1, das gekennzeichnet ist durch
a) Vermischen von
   I) 0,5 - 60 Gew.% einer oder mehrerer Verbindung(en) aus der Gruppe der Oxide, Hydroxide und Carbonate der Metalle der 2.Hauptgruppe;
   II) 5 - 95 Gew.% von hochdispersem SiO₂ mit einem Anteil von 0 - 20 Gew.% Al₂O₃; (bezogen auf das eingesetzte SiO₂)
   III) 0 - 60 Gew.% eines Trübungsmittels mit mindestens einem Absorptionsmaximum im Wellenlängenbereich von 1,5 - 10 »m;
   IV) 0,1 - 10 Gew.% einer organischen Faser;
b) Verpressen der hergestellten Mischung zu einem Formkörper
c) Erhitzen des hergestellten Formkörpers auf eine Temperatur über 700 °C.

Überraschenderweise wurde gefunden, daß bei der thermischen Behandlung des Formkörpers gemäß dem Schritt c) des Verfahrens die Verbindungen I) ganz oder teilweise zu Erdalkalisilikaten mineralisiert werden, ohne daß dabei die mikroporöse Struktur des Formkörpers und seine wärmedämmenden Eigenschaften beeinträchtigt werden. Durch die Neubildung von Silikaten bei der Wärmebehandlung erfährt der mikroporöse Formkörper eine zusätzliche Verfestigung, die sich günstig auf seine mechanische Verarbeitbarkeit und Beanspruchbarkeit auswirkt. Darüber hinaus sind die erfindungsgemäß hergestellten Körper mit wärmedämmenden Eigenschaften noch bei Umgebungstemperaturen von bis zu 950 °C verwendbar.

Als Komponente I) der Mischung, die in Schritt b) des Verfahrens zu einem Formkörper verpreßt wird, wird ein Oxid, Hydroxid oder ein Carbonat eines Metalls der 2. Hauptgruppe des Periodensystems, vorzugsweise des Calciums oder Magnesiums verwendet. Selbstverständlich können auch beliebige Mischungen der genannten Erdalkalimetallverbindungen eingesetzt werden. Der Anteil der Komponente I) an der Mischung, die in Schritt b) des Verfahrens verpreßt wird, beträgt 0,5 - 60 Gew.%, vorzugsweise 5 - 40 Gew.% und besonders bevorzugt 15 - 35 Gew.%. Es ist weiterhin von Vorteil, daß die Teilchen der Komponente I) eine BET-Oberfläche von 1 - 30 m²/g, vorzugsweise von 8 - 20 m²/g besitzen.

Die Komponente II) der Mischung bildet die Grundlage des herzustellenden mikroporösen Körpers. Verwendet wird SiO₂ mit einem Anteil von 0 - 20 Gew.% Al₂O₃ (bezogen auf das eingesetzte SiO₂). Bevorzugt wird pyrogen erzeugtes SiO₂ eingesetzt, dessen spezifische Oberläche nach BET 10 - 700 m²/g, vorzugsweise 50 - 450 m²/g, besonders bevorzugt 150 - 400 m²/g beträgt. Der Anteil der Komponente II) an der Mischung, die in Schritt b) des Verfahrens verpreßt wird, beträgt 5 - 95 Gew.%, vorzugsweise 35 - 80 Gew.% und besonders bevorzugt 45 - 65 Gew.%.

Die als Komponente III) in Schritt a) des Verfahrens zugemischten Trübungsmittel sollten mindestens ein Absorptionsmaximum im Wellenlängenbereich von 1,5 - 10 »m aufweisen. Geeignete Verbindungen sind TiO₂, FeTiO₃, ZrO₂, ZrSiO₄ und Fe₃O₄ und Mischungen davon. Die Komponente III) hat einen Anteil von 0 - 60 Gew.%, vorzugsweise 10 - 50 Gew.% und besonders bevorzugt 15 - 40 Gew.% an der Mischung, die in Schritt b) des Verfahrens zu einem Formkörper verpreßt wird.

Der Anteil an organischen Fasern (Komponente IV) an der gemäß Schritt a) des Verfahrens herzustellenden Mischung beträgt 0,1 - 10 Gew.%, vorzugsweise 1 - 8 Gew.% und besonders bevorzugt 2 - 6 Gew.%. Besonders geeignet sind Graphit- und Kohlefasern, Zellstoff, Baumwolle und faserartige Kunststoffe. Vorzugsweise werden Fasern eingesetzt, deren Durchmesser größer als 3 »m ist.

Im Schritt a) des erfindungsgemäßen Verfahrens werden die vier Komponenten I) - IV) in den vorgewählten Mengenverhältnissen und im trockenen Zustand intensiv vermischt.

Gemäß dem Schritt b) des Verfahrens wird die im Schritt a) hergestellte Mischung unter Formgebung zu einem Formkörper verpreßt. Das Pressen erfolgt vorzugsweise unter spezifischen Preßdrücken von 2 - 30 bar, vorzugsweise 8 - 15 bar. Gegebenenfalls kann der erhaltene Formkörper bereits nach dem Pressen mechanisch bearbeitet werden.

Im Schritt c) des Verfahrens wird der Formkörper bei Temperaturen von über 700 °C, vorzugsweise bei 750 - 950 °C und besonders bevorzugt bei 800 - 950 °C gebrannt. Das Erhitzen des Formkörpers erfolgt zweckmäßigerweise in Tunnel- oder Rollenöfen oder in absatzweise betriebenen Öfen. Ferner wird das Erhitzen des Formkörpers unter oxidierenden Bedingungen vorgenommen, vorzugsweise in einer Sauerstoffatmosphäre oder unter geregelter Sauerstoffzufuhr. Auf diese Weise wird der Anteil an organischen Fasern im Formkörper oxidiert, wobei CO₂ und gegebenenfalls Wasser entweichen, ohne daß dabei der Formkörper zerstört wird. Die Wärmebehandlung führt weiterhin unter Ausbildung von Silikaten zu einer Mineralisierung der Erdalkalimetallverbindung(en) (Komponente I der in Schritt a) hergestellten Mischung). Durch diesen Vorgang wird der Formkörper zusätzlich verfestigt.

Der gemäß dem Schritt c) des Verfahrens hergestellte Formkörper mit wärmedämmenden Eigenschaften hat eine gegenüber der im Schritt a) des Verfahrens hergestellten Mischung veränderte Zusammensetzung: Der Anteil an überwiegend mikroporösen Erdalkalimetallsilikaten beträgt 0,5 - 50 Gew.%, vorzugsweise 3 - 30 Gew.% und besonders bevorzugt 5 - 20 Gew.%. Der Anteil an SiO₂ beträgt 5 - 95 Gew.%, vorzugsweise 25 - 75 Gew.% und besonders bevorzugt 35 - 65 Gew.%. Dieser Anteil verringert sich entsprechend um die Menge an Al₂O₃, welche ursprünglich in Schritt a) des Verfahrens zugemischt wurde. Der Anteil an Trübungsmittel beträgt 0 - 60 Gew.%, vorzugsweise 10 - 50 Gew.% und besonders bevorzugt 15 - 40 Gew.%. Der gebrannte, mikroporöse Formkörper ist frei von organischen Fasern und besitzt eine Porosität von typischerweise 70 - 95%. Seine Wärmeleitfähigkeit bewegt sich um λ = 0,02 - 0,1 W/mK (gemessen bei 300 - 500 °C gemäß ISO/TC 33). Der nach dem erfindungsgemäßen Verfahren hergestellte Körper hat ferner eine Dichte von 0,1 - 1,0 g/cm³, einen mittleren Porendurchmesser von 0,01 - 10 »m und ist auch noch bei einer Umgebungstemperatur von 950 °C als Wärmedämmstoff zu verwenden.

Der gemäß Schritt c) des Verfahrens erhältliche Formkörper kann verschiedenen Konfektionierungsmaßnahmen, beispielsweise einer nachträglichen mechanischen Bearbeitung durch Fräsen, Bohren, Sägen oder Schleifen unterzogen, hydrophobiert oder mit anorganischen Schichten wie Gips oder feuerfesten keramischen Massen ummantelt, oder in eine gasdichte, evakuierte Umhüllung eingeschweißt werden. Kanten und Flächen können mit Kunststoff- oder Metallfolie, Papier oder Glasgewebe kaschiert werden, wobei die verwendeten Kleber 0 - 2 mm, vorzugsweise 0 - 1 mm in die Oberfläche des Körpers eindringen können.

Aufgrund der genannten Eigenschaften kann der mikroporöse Formkörper als wärmedämmendes Material im Temperaturbereich von - 273 ° bis 950 °C verwendet werden, beispielsweise in Elektrogeräten wie Elektrospeichergeräten, keramischen Kochfeldern oder Toastern, in Industrieöfen, Meßgeräten, Kühlaggregaten und Kühlzellen.

Nachfolgend wird das erfindungsgemäße Herstellungsverfahren an Hand einiger Beispiele dargestellt:

### Beispiel 1

52 Gew.% hochdisperse Kieselsäure, 25 Gew.% CaCO₃ und MgCO₃ im Verhältnis 1:1, 21 Gew.% TiO₂ und 2 Gew.% Zellstoffasern wurden trocken gemischt und zu Platten mit einer Dichte von 0,34 g/cm³ axial verpreßt. Der Brand erfolgte kontinuierlich in einem Rollenofen mit Temperaturen bis zu 900°C. Die so erhaltenen gehärteten Platten wurden auf Maß geschliffen, gesägt und allseitig durch ein Aufkleben von Aluminiumfolie mit einer Dicke von 30»m kaschiert. Die Teile wiesen eine Dichte von 0,31 g/cm³ und eine Wärmeleitfähigkeit von 0,025 W/mK bei einer Temperatur von 200°C auf.

### Beispiel 2

50 Gew.% hochdisperse Kieselsäure, 15 Gew.% MgCO₃, 10 Gew.% Ca(OH)₂, 23 Gew.% FeTiO₃, 2 Gew.% Kohlenstoffasern wurden trocken intensiv vermischt und unter Berücksichtigung der Schwindung in der Herstellung von 0,3% zu Formteilen definierter Kontur verpreßt. Die Preßlinge wurden über 3 Stunden in einem Kammerofen auf 850°C aufgeheizt und bei dieser Endtemperatur 10 Min. lang getempert. Die Kühlung erfolgte durch gezieltes Einblasen von Luft.

### Beispiel 3

60 Gew.% hochdisperse Kieselsäure, 20 Gew.% ZrSiO₄, 5 Gew.% MgO, 13 Gew.% CaCO₃ und MgCO₃ im Verhältnis 1:1, 2 Gew.% Zellstoffasern wurden trocken gemischt und über einen quasi isostatischen Preßvorgang zu Halbschalen verpreßt. Der Brand erfolgte in einem Durchlaufofen bei Temperaturen bis zu 950°C. Diese Teile wurden mittels einer Bandsäge auf eine geforderte Länge abgelängt und einseitig mit schwer entflammbarem Papier kaschiert.

## Patentansprüche

1. Verfahren zur Herstellung eines mikroporösen Körpers mit wärmedämmenden Eigenschaften auf der Basis hochdisperser Oxide der Elemente Silicium und/oder Aluminium, gekennzeichnet durch
a) Vermischen von
I) 0,5 - 60 Gew. % einer oder mehrerer Verbindung(en) aus der Gruppe der Oxide, Hydroxide und Carbonate der Metalle der 2.Hauptgruppe;
II) 5 - 95 Gew. % von pyrogen hergestelltem SiO₂ mit einem Anteil von 0 - 20 Gew. % Al₂O₃ (bezogen auf das eingesetzte SiO₂);
III) 0 - 60 Gew. % eines Trübungsmittels mit mindestens einem Absorptionsmaximum im Wellenlängenbereich von 1,5 - 10 »m;
IV) 0,1 - 10 Gew. % einer organischen Faser;
b) Verpressen der hergestellten Mischung zu einem Formkörper
c) Erhitzen des hergestellten Formkörpers auf eine Temperatur über 700 °C.

2. Verfahren nach Anspruch 1, dadurch gekennzeichnet, daß das Erhitzen des Formkörpers im Schritt c) des Verfahrens unter oxidierenden Bedingungen durchgeführt wird.

3. Verfahren nach Anspruch 1 oder 2, dadurch gekennzeichnet, daß der Formkörper im Schritt c) des Verfahrens auf eine Temperatur von 750 - 950 °C, vorzugsweise auf 800 - 950 °C erhitzt wird.

4. Verfahren nach einem der Ansprüche 1 bis 3, dadurch gekennzeichnet, daß der Formkörper nach dem Erhitzen mechanisch bearbeitet, hydrophobiert, mit anorganischen Schichten wie Gips oder feuerfesten Massen ummantelt, mit Kunststoff- oder Metallfolie, Papier oder Glasgewebe kaschiert, oder in eine gasdichte, evakuierte Umhüllung eingeschweißt wird.

5. Verwendung des nach einem der Ansprüche 1 bis 4 hergestellten mikroporösen Körpers als wärmedämmendes Material im Temperaturbereich von - 273 °C bis 950 °C.

## Claims

1. A process for the production of a microporous body having heat insulation properties which is based on highly disperse oxides of the elements silicon and/or aluminum, which comprises
a) mixing of
I) 0.5 - 60% by weight of one or more compound(s) from the group comprising oxides, hydroxides and carbonates of metals of main group 2;
II) 5 - 95% by weight of pyrogenically prepared SiO₂ with a content of 0 - 20% by weight of Al₂O₃ (based on the SiO₂ employed);
III) 0 - 60% by weight of an opacifying agent having at least one absorption maximum in the wavelength range of 1.5 - 10 »m;
IV) 0.1 - 10% by weight of an organic fiber;
b) pressing the mixture prepared to form a shaped article
c) heating of the shaped article produced at a temperature above 700°C.

2. The process as claimed in claim 1, wherein heating of the shaped article in step c) of the process is carried out under oxidizing conditions.

3. The process as claimed in claim 1 or 2, wherein the shaped article is heated to a temperature of 750 - 950°C, preferably to 800 - 950°C, in step c) of the process.

4. The process as claimed in one of claims 1 to 3, wherein, after heating, the shaped article is worked mechanically, rendered hydrophobic, covered with inorganic layers, such as gypsum or fireproof compositions, laminated with plastic film or metal foil, paper or glass fabric, or sealed in a gastight, evacuated casing.

5. The use of the microporous body produced as claimed in one of claims 1 to 4 as a heat insulating material in the temperature range from -273°C to 950°C.

## Revendications

1. Procédé pour la préparation d'un corps microporeus ayant des caractéristiques thermoisolantes à base d'oxydes très dispersée des éléments silicium et/ou aluminium, caractérisé par
a) Mélange
I) de 0,5 à 60% en poids d'un ou plusieurs composés pris dans le groupe des oxydes, hydroxydes et carbonates de métaux du 2ème groupe principal ;
II) de 5 à 95% en poids de SiO₂ pyrogène comportant une portion de 0 à 20% en poids de Al₂O₃ (par rapport à SiO₂ utilisé)
III) de 0 à 60% en poids d'un agent opacifiant avec au moins un maximum d'absorption dans le domaine des longueurs d'onde de 1,5 à 10 »m ;
IV) de 0,1 à 10% en poids d'une fibre organique;
b) Compression du mélange préparé pour obtenir un objet moulé
c) Chauffage de l'objet moulé préparé à une température supérieure à 700°C.

2. Procédé selon la revendication 1, caractérisé en ce qu'on réalise le chauffage de l'objet moulé dans l'étape c) du procédé dans des conditions oxydantes.

3. Procédé selon la revendication 1 ou 2, caractérisé en ce que l'objet moulé de l'étape c) du procédé est chauffé à une température de 750 à 950°C, de préférence de 800 à 950°C.

4. Procédé selon une des revendications 1 à 3, caractérisé en ce l'objet moulé, après chauffage, est façonné mécaniquement, hydrofugé, enrobé de couches inorganiques comme le plâtre ou les masses réfractaires, plaqué de feuilles de matière plastique ou de métaux, du papier ou du tissus de verre, ou soudé dans une chemise évacuée imperméable aux gaz.

5. Utilisation de la substance microporeuse préparée selon une des revendications 1 à 4 en tant que matériau thermoisolant dans le domaine de température de -273°C à 950°C.
